# EUROPEAN PATENT APPLICATION

(11) **EP 4 056 942 A1**
(43) Date of publication of application: **14.09.2022**
(21) Application number: 22161205.4
(22) Date of filing: 09.03.2022
(51) Int. Cl.: F41A 33/02, A63F 13/219, A63F 13/837, F41J 5/10

(54) **DETECTION OF SHOOTING HITS IN A DYNAMIC SCENE**

(30) Priority: 12.03.2021 US 202163160082 P
(71) Applicant: eRange Corporation, Englewood Cliffs, New Jersey 07632 (US)
(72) Inventor: Stern, Yuval, Even Yehuda (IL); Alon, Haim, Raanana (IL)
(74) Representative: Marks & Clerk LLP

(57) **Abstract**

A method for detecting shooting hits on a virtual target includes receiving an original video, creating a plurality of artificial frames, inserting artificial frames between frames of the original video and optionally deleting original frames to create a modified video, projecting the modified video on a target to create the virtual target, capturing images of the virtual target and comparing between a first artificial frame in an image captured before a second artificial frame in an image, to locate a hit in the virtual target. A system for detecting shooting hits in a video projected on a target includes a dynamic scene handler to create and insert artificial frames between original frames of the video to create a modified video and project the modified video on the target, and a hit detector to capture a plurality of images of the target and compare between artificial frames to detect a hit.

## Description

### FIELD

The invention relates to shooting hit detection generally and to shooting hit detection in dynamic scene in particular.

### BACKGROUND

Shooting is a popular sport and ranges are found in many places around the world. The shooting proficiency of the shooter (marksmanship) can be evaluated according to his success rate expressed by the number of shots that hit the target and the distance of each hit from one or more specific locations in the target to which the shooter is aiming, referred herein as focus objects. An example of a focus object is the center of a target called the bullseye.

The targets in the range are surfaces, usually made of paper or carton with a printed figure. The figure may be an illustration, a drawing, a painting, a photograph, a picture, or any other visible shape. The shooter aims at specific locations in the target (e.g., the focus objects) and the figure on the target is usually designed to allow the shooter to easily identify a bullet strike and evaluate its location compared to the focus object.

The target (and the figure on it) does not change during a shooting session and the shape, size and location of the focus objects do not change throughout the entire shooting session.

### SUMMARY

There is provided, in accordance with an embodiment of the invention, a method for detecting shooting hits on a virtual target. The method includes receiving an original video that includes original frames, creating a plurality of artificial frames, inserting the plurality of artificial frames between the original frames, and deleting zero or more original frames to create a modified video, projecting the modified video on a target to create the virtual target, capturing images of the virtual target and comparing between a first artificial frame in an image captured before a second artificial frame in an image, to locate a hit in the virtual target.

Additionally, in accordance with an embodiment of the invention, the inserting step includes receiving a shot signal and inserting a preconfigured number of frames at a preconfigured rate.

Moreover, in accordance with an embodiment of the invention, the projecting is synchronized with the capturing so that a projected frame is completely captured.

Furthermore, in accordance with an embodiment of the invention, the creating step includes applying procedures based on a configurated type of the artificial frame.

Still further, in accordance with an embodiment of the invention, the procedures include assigning a preconfigured value to pixels in each of the artificial frames.

Additionally, in accordance with an embodiment of the invention, the procedures include assigning a preconfigured percentage of a value of pixels comprising an original frame to pixels of an artificial frame.

Moreover, in accordance with an embodiment of the invention, the procedures include creating each of the artificial frames by using some pixels from an original frame according to a configuration and creating other pixels according to a configuration.

Moreover, in accordance with an embodiment of the invention, the comparing step includes receiving a shot signal and the first artificial frame is received before the shot signal and the second artificial frame is received after the shot signal.

Furthermore, in accordance with an embodiment of the invention, the artificial frames include meta data indicative of a location of focus objects and the comparing includes computing a location of a hit relative to the focus objects.

There is provided, in accordance with an embodiment of the invention, a system, implemented on at least one processor and memory for detecting shooting hits in a video projected on a target. The system includes a dynamic scene handler to create and insert artificial frames between original frames of the video to create a modified video and project the modified video on the target and a hit detector to capture a plurality of images of the target and compare between artificial frames to detect a hit.

Moreover, in accordance with an embodiment of the invention, the dynamic scene handler includes a video handler to receive an input video that includes original frames, insert artificial frames between original frames and delete zero or more original frames to create a modified video, an artificial frame creator to create the artificial frames and a projecting device to project the modified video on a target.

Additionally, in accordance with an embodiment of the invention, the artificial frame creator applies procedures based on a configured type of the artificial frame.

Moreover, in accordance with an embodiment of the invention, the procedures include assigning a preconfigured value to pixels in each of the artificial frames.

Furthermore, in accordance with an embodiment of the invention, the procedures include assigning a value to a pixel of the artificial frame based on a preconfigured percentage of a value of a pixel in a same location in a preceding original frame.

Still further, in accordance with an embodiment of the invention, the procedures include using some pixels from an original frame and creating other pixels according to configuration.

Moreover, in accordance with an embodiment of the invention, the artificial frames comprise meta data indicative of a location of focus objects and the hit detector computes a location of a hit relative to the focus objects.

Additionally, in accordance with an embodiment of the invention, the hit detector includes an image sensor to capture images of the target, an artificial frame detector to detect images of artificial frames and an image processor to compare between images of artificial frames to detect a hit.

Furthermore, in accordance with an embodiment of the invention, the hit detector includes a plurality of sensor units capable of sensing a shot has been fired, and a signal handler to detect a shot signal and wherein the hit detector compares between a first artificial frame received before the shot signal and a second artificial frame received after the shot signal.

Moreover, in accordance with an embodiment of the invention, the video handler inserts artificial frames after receiving a shot signal from the signal handler.

Additionally, in accordance with an embodiment of the invention, the dynamic scene handler is synchronized with the hit detector such that every frame projected by the dynamic scene handler is completely captured by the hit detector.

### BRIEF DESCRIPTION OF THE DRAWINGS

The subject matter regarded as the invention is particularly pointed out and distinctly claimed in the concluding portion of the specification. The invention, however, both as to organization and method of operation, together with aspects thereof, may be understood by reference to the following detailed description when read with the accompanying drawings in which:
Fig. 1 is a schematic illustration of a flow for detecting shooting hits on a virtual target, constructed and operative in accordance with a preferred embodiment of the present invention;
Fig. 2 is a schematic illustration of a shooting detection system, constructed and operative in accordance with an embodiment of the present invention, implementing the flow of Fig. 1;
Fig. 3 is a schematic illustration of a dynamic scene handler, constructed and operative in accordance with an embodiment of the present invention, used by shooting detection system of Fig. 2;
Fig. 4 is a schematic illustration of a flow, operative in accordance with an embodiment of the present invention, implemented by dynamic scene handler of Fig. 3;
Fig. 5 is a schematic illustration of a hit detector, constructed and operative in accordance with an embodiment of the present invention, used by shooting detection system of Fig. 2; and
Fig. 6 of a flow, operative in accordance with an embodiment of the present invention, implemented by hit detector of Fig. 5.

It will be appreciated that for simplicity and clarity of illustration, elements shown in the figures have not necessarily been drawn to scale. For example, the dimensions of some of the elements may be exaggerated relative to other elements, for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the invention may be practiced without these specific details. In other instances, well-known methods, procedures, features and components have not been described in detail so as not to obscure the invention. In the accompanied drawings, similar numbers refer to similar elements in different drawings.

When the target in a range is a paper or a carton with a printed figure that does not change during a shooting session, detecting the hits may be done by comparing the target image captured by a camera before the shot and a target image captured after the shot. If a shot did not hit the target the frames will be similar. However, if the shot hit the target, the frames will be different, and a new graphical element may be present in the image captured after the shot that did not exist before.

When the range uses dynamic scenes, that are produced by projecting a video on a target (possibly blank) and creating a virtual target, images constantly change, (e.g., something always happens in the video and people and animals may move, walk or run, objects may change their location, the entire scenery may change and the like) thus each captured frame may be different from a previous captured frame. Comparing a frame captured before the shot and a frame captured after the shot, may reveal many changes, from which detecting the hit may not be feasible.

Methods and systems according to embodiments of the invention are directed at providing automatic shooting hit detection on virtual targets created by projecting a video on a target (possibly blank), where the figures and the focus objects on the target may change during the shooting session.

The dynamic scene may be operated in a range where the target is possibly blank and embodiments of the present invention are directed at modifying an input video by adding artificial frames between frames of the input video, projecting it on the target and providing automatic shooting evaluation of hits by capturing images of the target using a camera and comparing artificial frames before and after a shot has been detected. It may be noted that the target may be blank or may have a figure over which the video may be projected.

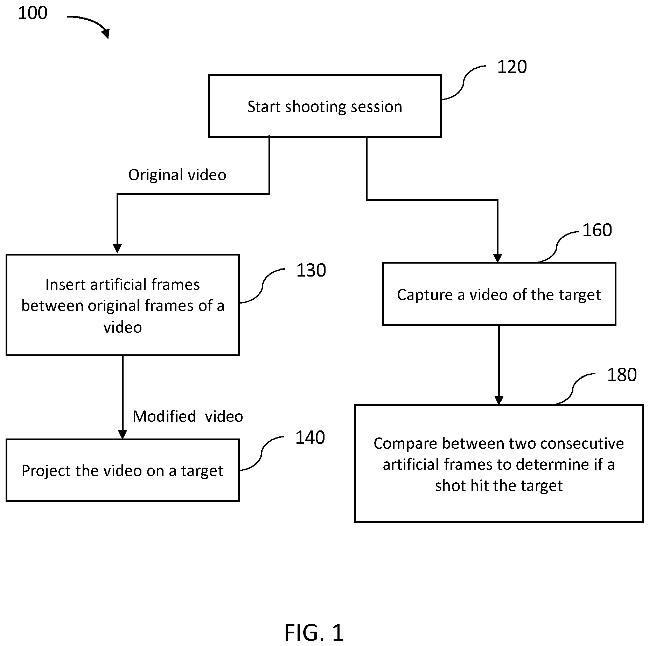

Fig. 1, to which reference is now made, is flow 100, implemented by methods and systems constructed in accordance with an embodiment of the present invention.

In step 120, the shooter may start the shooting session which activates a projection of a video on the target. (The video may be provided as a live video broadcast from another site or a video clip). In step 130, the system may create and insert artificial recognizable frames in a predetermine rate between or instead original frames of the input video and in step 140, the system may project the video on a target, the video may comprise both original and artificial frames.

In step 160, the system may capture images (snapshots or video) of the target. It may be noted that steps 140 and 160 may be performed in parallel and the system may capture the target with the projected video (that include both original and artificial frames) and any hit (visible sign like a bullet hole, an indication created by a laser gun, an indication created by a paintball gun and the like) if present. In step 180, the system may compare between two artificial frames to determine if there is a difference between the earlier artificial frame and the later artificial frame indicating that a shot hit the target.

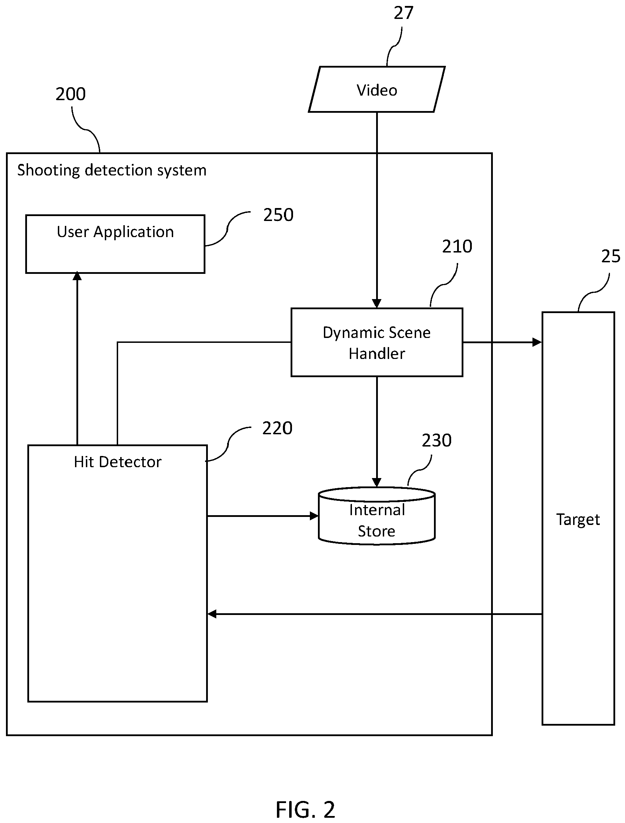

Fig. 2, to which reference is now made, is a schematic illustration of shooting detection system 200, implementing flow 100, constructed and operative in accordance with an embodiment of the present invention. Shooting detection system 200 may be installed in a shooting range where a target 25 may be present. Shooting detection system 200 comprises a dynamic scene handler 210; a hit detector 220; an internal store 230 and a user application 250.

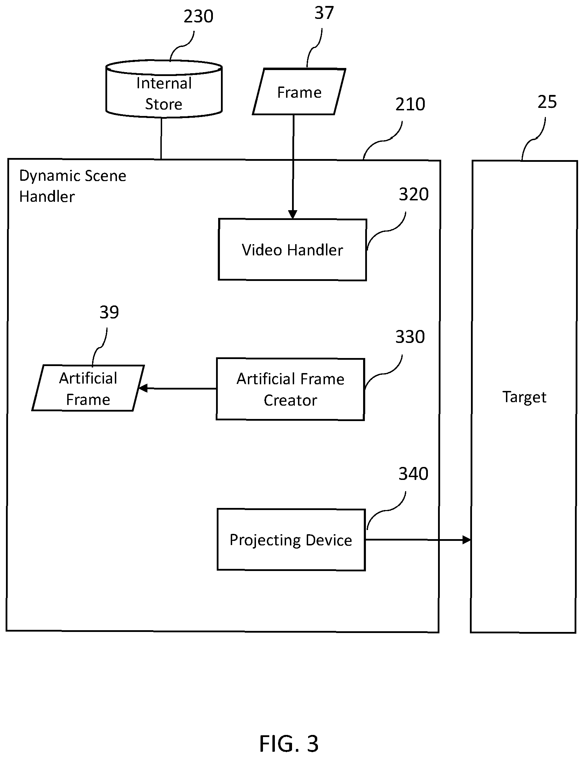

Fig. 3, to which reference is now made, is a schematic illustration of dynamic scene handler 210, constructed and operative in accordance with an embodiment of the present invention. Dynamic scene handler 210 may receive a live video stream or a video clip to which it may add artificial frames in between or instead original frames and create a modified video to be projected on the target, instead of the original one. It may be noted that the modified video may look like the original one. The new artificial frames may be used by hit detector 220 to detect shooting hits on the target while for the shooter, the new video with the additional frames may look like the original one.

Dynamic scene handler 210 may receive a plurality of original frames 37 from the original video and may create a plurality of artificial frames 39 to be added in specific locations in the original video. Dynamic scene handler 210 comprises a video handler 320; an artificial frame creator 330, and a projecting device 340.

Video handler 320, may receive the video over any wireless or wireline connection and may insert artificial frames in between or instead original prior to projecting it on the target.

Artificial frame creator 330 may have a configuration determining various aspects of the artificial frame to create, the configuration may be stored in internal store 230.

The configuration may include the type of the artificial frame. The type may be pure artificial, blend, partial and the like.

When the configuration is pure artificial, artificial frame creator 330 may create all pixels with a preconfigured color e.g., white, resulting in a blank frame.

When the configuration is blend, artificial frame creator 330 may create the pixels of the artificial frames by using a mix of some percentage of the original color of the image, i.e., the color of each pixel in the original image (e.g., 50% of the original pixel value) and some percentage of an artificial color (e.g., 50% of a white artificial image).

When the configuration is partial, artificial frame creator 330 may use the color of some pixels from the original frame to create the artificial frame and create the remaining pixels according to a configuration. This configuration may also determine an area from which the original pixels are used and / or a logic by which the pixels from the original frame may be selected.

For example, for each 3 consecutive frames in the input video, artificial frame creator 330 may use the pixels in the upper 1/3 part of the original frame as the pixels of the upper 1/3 part of an artificial frame and fill the rest of the artificial frame with white pixels. Then, when creating the next artificial frame, use the pixels in the middle 1/3 part of an original frame as the pixels in the middle 1/3 part of an artificial frame and fill the rest of the pixels in the artificial frame with white pixels. Then, when creating the next artificial frame use the pixels from the lower 1/3 part of an original frame as the pixels in the lower 1/3 part of an artificial frame and fill the rest of the pixels in the artificial frame with white.

The configuration may include the number and the types of artificial frames to add at various fuse points. For example, the configuration may be to add 2 artificial frames, one containing pixels from the upper part of the original frame and the other containing pixels from the lower part of the original frame and add the first one after an original frame and the next one after the next original frame and the like.

The configuration may also indicate that an artificial frame may replace an original frame, i.e., dynamic scene handler 210 may delete the original frame and insert an artificial frame, effectively replacing the original frame by an artificial one.

Dynamic scene handler 210 may also store potential metadata associated with each artificial frame in internal store 230. The meta data may indicate the location of focus objects in the artificial frame. The meta data may include a score value associated with each pixel, the score reflecting the location of the pixel relative to the target objects. When the artificial frame is of type partial the metadata may include information regarding the position of artificial pixels in each artificial frame (upper half of the frame) and the like.

The configuration and metadata, stored in internal store 230 may be accessible to both dynamic scene handler 210, that may insert the information, and hit detector 220, that may read the information and use it for detecting a hit and determine its quality.

The configuration and the meta data may be used by hit detector 220 to determine how to process the artificial frames and to provide various insights related to the quality of the shot that can be displayed to the shooter by user application 250.

For example, when the configuration is partial, the metadata may include information related to which pixels are artificial. Hit detector 220 may use the metadata to compare only artificial pixels in the artificial frames and not original pixels in the process of searching for a hit.

Artificial frame creator 330 may create an artificial frame that will be identifiable as such by hit detector 220. Artificial frame creator 330 may embed a configured mark in a configured location in each created artificial frame. Additionally, or alternatively, artificial frame creator 330 may create the artificial frame so that a configured calculation performed on pixels of the artificial frame (e.g., average value of the pixels, maximum value of a pixel, etc.,) will always give a predetermined expected result (e.g., value smaller than a configured value), that is not likely to be produces when the configured calculation is performed on an original frame.

Projecting device 340 may be any known projecting device capable of projecting a video received in real time or stored as a file so that the projected frames may be well visible to the shooter and to hit detector 220.

Video handler 320 may receive video frames and may create a new modified video by adding artificial frames, created by artificial frame creator 330 between, or instead frames of the original video.

Video handler 320 may have a configuration determining various aspects of how to handle the original video, the configuration may be stored in internal store 230.

Video handler 320 may use a configuration to determine how to insert artificial frames. The configuration may define for example the insertion rate (e.g., after a configurable number of original video frame (e.g., 1) add one artificial frame) the fusion type (add or replace) and the like. Video handler 320 may fuse the artificial frames in real time, when receiving a live video or may create the modified video with the artificial frames from an existing video clip in advance.

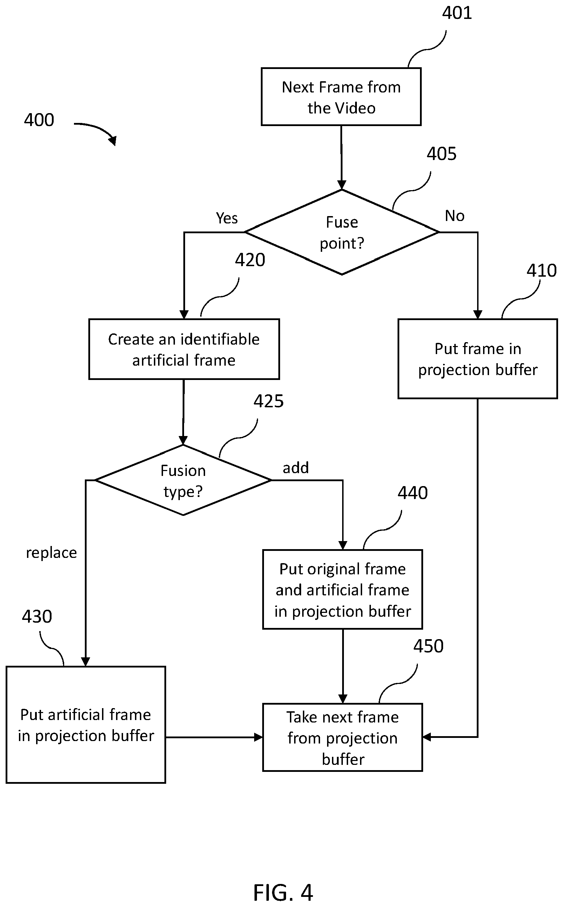

Fig. 4, to which reference is now made is a schematic illustration of flow 400, implemented by video handler 320 according to an embodiment of the present invention.

Video handler 320 may receive in step 401 frames of an input video. In step 405 video handler 320 may determine, based on a configuration and the position of the frame in the video if it is a fuse point. As mentioned herein above, this configuration may include insertion rate, i.e., to add an artificial frame after a predefined configured number of original frames (e.g., one frame, two frames, 5 frames and the like) and therefore after handling the configured number of frames, the next frame may be in a fuse point.

If the location is not a fuse point, video handler 320 may continue to step 410 and put the received original frame in a projection buffer. If the location is a fuse point, video handler 320 may continue to step 420 where artificial frame creator 330 may create an identifiable artificial frame. It step 425 video handler 320 may determine, according to configuration the fusion type. If the fusion type is to replace the original frame by the new artificial frame, video handler 320 may continue to step 430 and put only the artificial frame in the projection buffer. If the fusion type is to add the artificial frame in addition to the original frame, video handler 320 may continue to step 440, and put both the original frame and the new artificial frame in the projection buffer.

In step 450, projecting device 340 may take the next frame from the projection buffer and may project it on target 25. The next frame to project may be an original frame or an artificial frame according to their order in the projection buffer.

When video handler 320 operates offline, it may store the modified video, containing the additional artificial frames, as a file that may be projected at any time by projecting device 340.

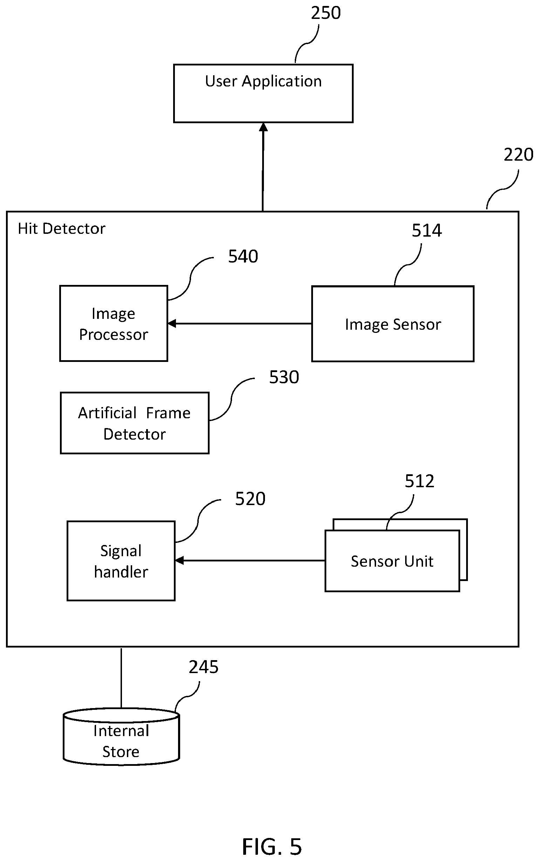

Fig. 5, to which reference is now made is a schematic illustration hit detector 220, constructed and operative in accordance with an embodiment of the present invention.

Hit detector 220 may be a computing module capable of determining the quality of the shot (e.g., if a shot hit the target and/or the focus objects in the live video). Hit detector 220 comprises a plurality of optional sensor units 512; a signal handler 520; an artificial frame detector 530; an image sensor 514 and an image processor 540.

Image sensor 514 may be any camera capable of capturing a live video and/or a set of image snapshots and/or a sequence of images of the target such as a stereoscopic camera, a night-vision camera an infra-red (IR) camera and the like.

Sensor unit 512 may be a device equipped with one or more sensors capable of sensing and detecting a shooting event, that the shooter may have with him during a shooting session (a bracelet, a ring, an accessory that can be attached to the clothes of the shooter, to his body or to his gun and the like) or that may be installed somewhere in the range. Sensor unit 512 may have a processor capable of creating a message indicative of the event and a communication element to send the message over a wireless channel. The sensors in sensor device 512 may be any combination of one or more sensors such as an accelerometer, a sound sensor, a pressure sensor, a camera, or any other type of sensor that may sense the shooting event.

It may be noted that sensor units 512 may be installed on different location in the range and or mounted on the shooter body. For example, sensor unit 512 may be bracelet equipped with an accelerometer worn on the hand the user is using for shooting. Another example of sensor unit 512 may be a camera sensor located on a pillar in the range that may capture the shooter during the shooting session. A sensor unit 512 may be located in any location from which it may sense the shooting event, and can be placed in front of the user, above him, on his side and the like.

When the shooter fires, sensor unit 512 may sense the fire, create a message containing information related to the shot (time, sensed values and the like) and send it over a wireless or a wired communication channel.

Signal handler 520 may continuously listen to events from the various sensor units 512. When a received event passes a configurable threshold, it may create a shot signal containing relevant information.

Image processor 540 may continuously film or capture snapshots of the target and store the captures frames in a known location such as a buffer of hit detector 220.

Artificial frame detector 530 may identify artificial frames in the captured frames by either detecting the existence of the configured mark in the preconfigured location in the frame or applying the preconfigured calculation and receiving the expected result.

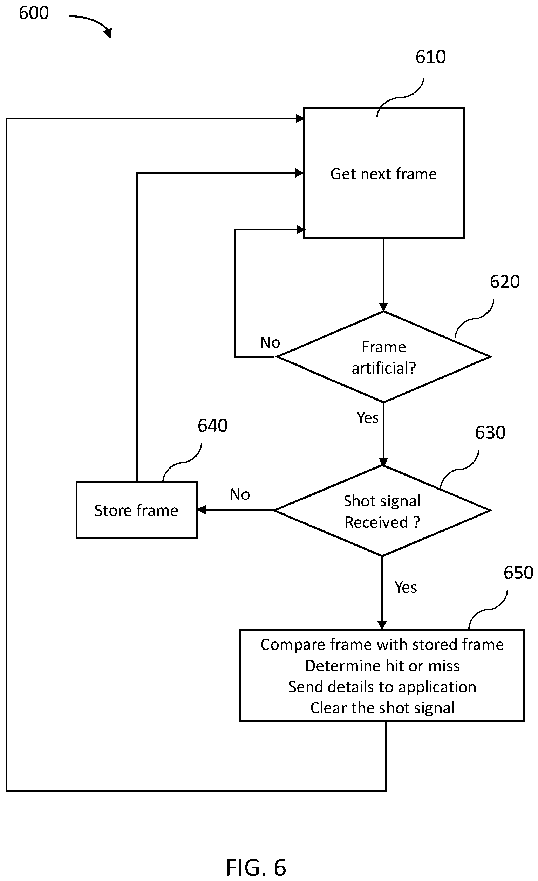

Fig. 6, to which reference is now made is a schematic illustration of flow 600, implemented by hit detector 220 according to an embodiment of the present invention.

In step 610, hit detector 220 may get the next frame captured and stored by image processor 540. In step 620, artificial frame detector 530 may determine if the frame is an artificial frame (inserted to the video by dynamic scene handler 210). If the frame is not artificial, hit detector 220 may return to step 620 and handle the next frame. If the frame is artificial, hit detector 220 may continue to step 630 and check if signal handler 520 raised a shot signal.

If a shot signal was not raised, hit detector 220 may continue to step 640 and store the artificial frame and then return to step 610 to handle the next frame. If a shot signal was raised, hit detector 220 may continue to step 650 and compare the current received artificial frame with the previous stored artificial frame and determine if the shot hit or missed the target and / or the focus objects. Hit detector 220 may then send the details to user application 250 and clear the shot signal.

Hit detector 220 may skip step 630 when the shooter does not use any sensor unit 512. In this case, hit detector 220 may compare between each consecutive artificial frames to detect the appearance of hits.

Hit detector 220 may use systems and methods like the ones described in patent US10502531, assigned to the common assignee of the present invention, to evaluate the accuracy of the shooting and determine the location of the hits relative to the focus objects on the target.

Hit detector 220 may determine if the shooter hit the target by comparing artificial frames before and after a shot signal. If hit detector 220 detects a shot, the hit details (such as coordinates, time etc.) may be sent to user application 250 that may display the location of the detected hit in the video and store the information for statistics and history.

Hit detector 220 may read the configuration and metadata associated with the artificial frames from internal store 230 and use it for example to determine how many artificial frames to compare and which part of each artificial frame to compare (when the type of the artificial frame is partial). Hit detector 220 may use the metadata to evaluate the location of the shot with respect to the location of focus objects and the speed at which the shooter responded to changes in the video scene and the like.

In the example described above, where the configuration of the type of the artificial frame was partial, with 3 parts (3 artificial frames, each using a different 1/3 part of an original frame) hit detector 220 may compare 3 artificial frames received after the shot signal with one artificial frame received before the shot signal, and use the metadata associated with each artificial frame to compare only the relevant part (i.e., only the artificial part).

In one embodiment, dynamic scene handler 210 may be in communication with hit detector 210. The communication may enable synchronizing the functionality of projecting device 340 and image sensor 514 such that every frame projected by dynamic scene handler 210 (original and artificial) may be completely captured by hit detector 210 during the entire shooting session and ensure that each projected artificial frame is completely captured. In addition, the communication between dynamic scene handler 210 and hit detector 210 may enable sharing information related to projected frames such that hit detector 220 may for example read metadata related to a projected frame from store 230 and use it for detecting hits and evaluating their quality.

Internal store 230 may be any type of store capable of storing structured and unstructured data. Internal store 230 may store the various configuration parameters related to the various entities. For example, internal store 230 may have the configuration of the artificial frame including the type, the fusion point, the rate, and the like. Internal store 230 may store information related to each created artificial frame including the frame metadata such as the location of the focus objects, the location of original pixels and the like. Internal store 230 may store some or all frames of the original video and some or all the frames of the modified video and any other data needed by the various elements of shooting detection system 200.

User application 250 may have an online real-time module to display the hits on the current captured video on a local display during the shooting session. The hit information may include a visible indication of the hit (e.g., green circle that surrounds the hit) and information such as the number of the hit in the session, a time stamp, the hit coordinates and the like. User application 250 may provide a score related to the user performance reflecting the accuracy and the timing of the hit relative to the scene projected in the video.

In addition, user application 250 may have an offline module (that may be running in the cloud) that may store information related to all sessions of the user. The information of each shooting session may include the captured video with the marked detected shots and the details of each hit.

User application 250 may also compute statistics and provide history data for the user to compare his performance between the various shooting sessions.

In one embodiment, video handler 320 may be in communication with hit detector 220 and may receive shot signals created by signal handler 520 (Fig. 5) of hit detector 220. In this case, video handler 320 may create a predetermined number of artificial frames and insert them for a predefined period of time, in a predetermined rate after receiving a shot signal (i.e., the fuse point (step 405 of Fig. 4) may be determined as the existence of a shot signal). It may be noted that there is a delay between the shooting event (that may be captured by sensor units 512 and processed by signal handler 520) and the actual hit of the bullet in the target. A frame, projected by projecting device 340 (Fig. 3) to the target after receiving a shot signal, may be captured by image sensor 514 before the bullet hit the target. Consecutive artificial frames captured after the hit may be used by hit detector 220 to detect the hit.

It may be noted that the range mentioned herein above may be any facility, indoors or outdoors where a target shooting session may take place.

It may be appreciated by the person skilled in the art that the different parts of the system, shown in the different figures and described herein, are not intended to be limiting and that the system may be implemented by more or less parts, or with a different arrangement of parts, or with one or more processors performing the activities of the entire system, or any combination thereof. It may also be appreciated by the person skilled in the art that the steps shown in the different flows described herein are not intended to be limiting and that the flows may be practiced with more or less steps, or with a different sequence of steps, or any combination thereof.

Unless specifically stated otherwise, as apparent from the preceding discussions, it is appreciated that, throughout the specification, discussions utilizing terms such as "analyzing", "processing," "computing," "calculating," "determining," "detecting", "identifying" or the like, refer to the action and/or processes of a general purpose computer or computing device or similar electronic computing device that manipulates and/or transforms data represented as physical, such as electronic, quantities within the computing system's registers and/or memories into other data similarly represented as physical quantities within the computing system's memories, registers or other such information storage, transmission or display devices.

Embodiments of the invention may include apparatus for performing the operations herein. This apparatus may be specially constructed for the desired purposes, or it may comprise a general-purpose computer selectively activated or reconfigured by a computer program stored in the computer. The resultant apparatus when instructed by software may turn the general-purpose computer into inventive elements as discussed herein. The instructions may define the inventive device in operation with the computer platform for which it is desired. Such a computer program may be stored in a computer readable storage medium, suitable for storing electronic instructions and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description. In addition, embodiments of the invention are not described with reference to any particular programming language. It will be appreciated that a variety of programming languages may be used to implement the teachings of the invention as described herein.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method for detecting shooting hits on a virtual target, the method comprising:
receiving an original video comprised of original frames;
creating a plurality of artificial frames;
inserting the plurality of artificial frames between the original frames, and
deleting zero or more original frames thereby creating a modified video;
projecting the modified video on a target, thereby creating the virtual target;
capturing images of the virtual target; and
comparing between a first artificial frame in an image captured before a second artificial frame in an image, to locate a hit in the virtual target.

2. The method of claim 1 wherein the inserting comprises receiving a shot signal and inserting a preconfigured number of frames at a preconfigured rate.

3. The method of claim 1 or 2 wherein the projecting is synchronized with the capturing and a projected frame is completely captured.

4. The method of claim 1, 2 or 3 wherein the creating comprises applying procedures based on a configurated type of the artificial frame.

5. The method of any one preceding claim wherein the comparing comprises:
receiving a shot signal; and
the first artificial frame is received before the shot signal and the second artificial frame is received after the shot signal.

6. The method of any one preceding claim wherein the artificial frames comprise meta data indicative of a location of focus objects and the comparing comprises computing a location of a hit relative to the focus objects.

7. A system, implemented on at least one processor and memory, for detecting shooting hits in a video projected on a target, the system comprises:
a dynamic scene handler to create and insert artificial frames between original frames of the video to create a modified video and project the modified video on the target; and
a hit detector to capture a plurality of images of the target and compare between artificial frames to detect a hit.

8. The system of claim 7 wherein the dynamic scene handler comprises:
a video handler to receive an input video comprised of original frames, insert artificial frames between original frames and delete zero or more original frames to create a modified video;
an artificial frame creator to create the artificial frames; and
a projecting device to project the modified video on a target.

9. The system of claim 8 wherein the artificial frame creator applies procedures based on a configured type of the artificial frame.

10. The system of claim 8 or 9 wherein the artificial frames comprise meta data indicative of a location of focus objects and the hit detector computes a location of a hit relative to the focus objects.

11. The system of claim 8, 9 or 10 wherein the video handler inserts artificial frames after receiving a shot signal from the signal handler.

12. The system of any one of claims 7 to 11 wherein the hit detector comprises:
an image sensor to capture images of the target;
an artificial frame detector to detect images of artificial frames; and
an image processor to compare between images of artificial frames.

13. The system of any one of claims 7 to 12 wherein the hit detector comprises:
a plurality of sensor units capable of sensing a shot has been fired; and
a signal handler to detect a shot signal and wherein the hit detector compares between a first artificial frame received before the shot signal and a second artificial frame received after the shot signal.

14. The system of any one of claims 7 to 13 wherein the dynamic scene handler is synchronized with the hit detector such that every frame projected by the dynamic scene handler is completely captured by the hit detector.
